# EUROPEAN PATENT APPLICATION

(11) **EP 4 730 134 A1**
(43) Date of publication of application: **22.04.2026**
(21) Application number: 24881359.4
(22) Date of filing: 26.09.2024
(51) Int. Cl.: G06F 11/30

(54) **MULTI-CORE MCU MONITORING METHOD AND DEVICE, VEHICLE, AND COMPUTER READABLE STORAGE MEDIUM**

(30) Priority: 25.10.2023 CN 202311400400
(71) Applicant: Zhaoqing Xiaopeng New Energy Investment Co., Ltd., Zhaoqing, Guangdong 526238 (CN); Guangzhou Xiaopeng Motors Technology Co., Ltd., Guangzhou, Guangdong 510000 (CN)
(72) Inventor: LI, Zesheng, Guangzhou, Guangdong 510000 (CN)
(74) Representative: Ran, Handong
(86) International application number: PCT/CN2024/121590
(87) International publication number: WO 2025/086993

(57) **Abstract**

The present application discloses a multi-core MCU monitoring method and device, a vehicle, and a computer readable storage medium. The method comprises: acquiring current state information corresponding to a slave core monitoring task in each slave core so as to determine whether a target slave core in a hang state exists among the slave cores; if a target slave core in the hang state exists, determining a first duration of the target slave core being in the hang state; and if the first duration reaches a corresponding first preset duration, executing a recovery operation corresponding to the target slave core. According to the present application, slave cores are monitored in real time by means of slave core monitoring tasks, and if an abnormal target slave core exists among the slave cores, the target slave core can be recovered in time, so that an abnormal slave core in a multi-core MCU is recovered in time, the slave core in the multi-core system is effectively recovered in time under the condition that the slave core is abnormal, and the normal operation of the whole system is recovered.

## Description

### Technical Field

The present application relates to the field of data processing technologies, and in particular to a multi-core MCU monitoring method and device, a vehicle and a computer readable storage medium.

### Background

With the rapid development of computer and electronic technologies, multi-core technology, where multiple chips are integrated into a single package, has gradually matured. Each core in a multi-core system can be regarded as a central processing unit (CPU), which enhances the processing efficiency of the multi-core system and reduces processing latency. However, in related technologies, it is difficult to promptly and effectively recover the system operation when a core in the multi-core system becomes abnormal.

### Summary

The primary objective of the present application is to provide a multi-core MCU monitoring method and device, a vehicle and a computer readable storage medium, so as to solve the technical problem in the related art that a multi-core system cannot be promptly and effectively recovered when a core in the system becomes abnormal.

To achieve the above objective, the present application provides a multi-core MCU monitoring method, which is applied to a master core of a multi-core MCU. The multi-core MCU further comprises a plurality of slave cores, and each slave core is provided with a plurality of slave core monitoring tasks with different periods. The multi-core MCU monitoring method comprises the following steps:
acquiring current state information corresponding to the slave core monitoring tasks in each slave core to determine whether there exists a target slave core among the slave cores that is in a hang state;
if a target slave core in the hang state exists, determining a first duration for which the target slave core remains in the hang state; and
if the first duration reaches a corresponding first preset duration, performing a recovery operation corresponding to the target slave core.

Further, the step of acquiring current state information corresponding to the slave core monitoring tasks in each slave core to determine whether there exists a target slave core among the slave cores that is in a hang state comprises:
acquiring the current state information corresponding to the slave core monitoring tasks in each slave core;
if there exists a first slave core monitoring task whose current state information is inconsistent with recorded state information corresponding to it, updating the recorded state information of the first slave core monitoring task; and
determining, based on the recorded state information of each slave core monitoring task, whether there exists a target slave core among the slave cores that is in the hang state.

Further, the step of determining, based on the recorded state information of each slave core monitoring task, whether there exists a target slave core among the slave cores that is in the hang state exists among the slave cores comprises:
determining, based on the recorded state information of each slave core monitoring task, an update duration of the recorded state information of each slave core monitoring task; and
determining, based on the update durations, whether there exists a target slave core among the slave cores that is in the hang state.

Further, the step of determining, based on the update durations, whether there exists a target slave core among the slave cores that is in the hang state comprises:
determining whether there exists a second duration among the update durations that is longer than a corresponding second preset duration; and
if a second duration longer than the corresponding second preset duration exists among the update durations, determining a slave core corresponding to the second duration as the target slave core.

Further, the step of acquiring current state information corresponding to the slave core monitoring tasks in each slave core comprises:
receiving, via a provider port interface, the current state information corresponding to the slave core monitoring tasks of each slave core, wherein each slave core executes the slave core monitoring tasks and, based on task scheduling information of the slave core, feeds back the current state information corresponding to the slave core monitoring tasks through the provider port interface of the slave core.

Further, the step of, if the first duration reaches a first preset duration, performing a recovery operation corresponding to the target slave core comprises:
if the first duration reaches the first preset duration, acquiring a schedule table corresponding to the target slave core; and
restarting the schedule table and outputting error information corresponding to the target slave core.

Further, after restarting the schedule table and outputting error information corresponding to the target slave core, the method further comprises:
resetting the first duration and the second duration after completion of the restart of the schedule table.

Further, the master core is provided with a plurality of master core monitoring tasks with different periods. The multi-core MCU monitoring method further comprises:
determining whether the master core is in a hang state based on state information corresponding to each master core monitoring task;
if the master core is in a hang state, determining a third duration for which the master core remains in the hang state; and
if the third duration reaches a corresponding third preset duration, restarting a system corresponding to the multi-core MCU.

In addition, to achieve the above objective, the present application further provides a multi-core MCU monitoring device, which is applied to a master core of a multi-core MCU. The multi-core MCU further comprises a plurality of slave cores, and each slave core is provided a plurality of slave core monitoring tasks with different periods. The multi-core MCU monitoring device comprises:
an acquiring module, configured to acquire state information corresponding to the slave core monitoring tasks in each slave core to determine whether there exists a target slave core among the slave cores that is in a hang state;
a determining module, configured to determine a first duration for which the target slave core remains in the hang state when a target slave core in a hang state exists; and
a recovery module, configured to perform a recovery operation corresponding to the target slave core if the first duration reaches a corresponding first preset duration.

In addition, to achieve the above objective, the present application further provides a vehicle comprising a memory, a processor, a multi-core MCU monitoring program stored in the memory and executable on the processor, wherein when executed by the processor, the multi-core MCU monitoring program implements the steps of the above multi-core MCU monitoring method.

In addition, to achieve the above objective, the present application further provides a computer-readable storage medium having stored thereon a multi-core MCU monitoring program which, when executed by a processor, implements the steps of the above multi-core MCU monitoring method.

In the present application, state information corresponding to slave core monitoring tasks in each slave core is acquired to determine whether, among the slave cores, any target slave core is in a hang state. If there is a target slave core in a hang state, a first duration of the target slave core is determined. If the first duration reaches a corresponding first preset duration, a recovery operation corresponding to the target slave core is performed. Slave cores are monitored in real time by means of slave core monitoring tasks, and when an abnormal target slave core is detected among the slave cores, the target slave core can be recovered in time. This enables restart and recovery of an abnormal slave core in the multi-core MCU, thereby ensuring timely and effective recovery of abnormal slave cores in the multi-core system, and restoring the entire system to normal operation.

### Brief Description of Drawings

Fig. 1 is a schematic flow chart of a multi-core MCU monitoring method according to a first example of the present application;
Fig. 2 is a schematic diagram of a possible scenario according to an example of the present application;
Fig. 3 is a schematic diagram of another possible scenario according to an example of the present application;
Fig. 4 is a schematic diagram of yet another possible scenario according to an example of the present application;
Fig. 5 is a structural schematic diagram of a vehicle in a hardware operating environment according to an example of the present application;
Fig. 6 is a schematic functional module diagram of a vehicle according to an example of the present application.

The objective, functions, and advantages of the present application will be further explained with examples and in reference to the accompanying drawings.

### Detailed Description of the Embodiments

It should be appreciated that the embodiments described herein are solely provided to explain the present application, which cannot be construed as limiting to the present application.

Currently, with the rapid development of computer and electronic technologies, multi-core technology, which integrates multiple chips into a single package, has become increasingly matured. Each core in a multi-core system can be regarded as a central processing unit (CPU), which enhances the processing efficiency of the multi-core system and reduces processing latency.

In a multi-core system, pipeline or parallel processing working modes are usually used to complete tasks to be processed. In a pipeline working mode, a task to be processed is divided into multiple parts, with each core completing one of the parts. Only after the preceding core completes its corresponding part can the subsequent core proceed with the next part of the task to be processed, and processing results are output after the last core completes its processing. In a parallel processing mode, each core can independently execute a task to be processed and output a result.

For multi-core systems, factors such as potential errors in a running program and interferences from harsh environment may cause a core to become abnormal and unable to function. Therefore, in order to ensure automatic recovery of a multi-core system without human intervention, a watchdog chip is typically integrated in the multi-core system as a monitoring device. The output end of the watchdog chip is connected to the reset terminal of the multi-core system. Each core in the multi-core system can periodically reset the watchdog chip during normal operation to prevent it from timing out, so that the multi-core system will not be reset. If all cores fail and are unable to reset the watchdog, the watchdog, left uncleared, times out, and the entire multi-core system is reset.

In the above monitoring approach, only when all cores fail can the multi-core system be reset. In this case, when the multi-core system adopts a pipeline working mode, a failure of any one of the cores may result in the tasks being unable to be performed correctly, meaning that the entire multi-core system needs to be reset. However, since the multi-core system cannot perform a reset while other cores are still functioning, it must wait until all cores have failed. When the multi-core system adopts a parallel processing mode, even if only a few cores are abnormal, the multi-core system cannot be reset until all cores have failed. Under the parallel processing mode, because each core works independently, failure of one core does not interrupt the operation of the entire multi-core system, and thus there is no need to reset the entire multi-core system as long as some cores remain functional. Consequently, the system cannot be promptly and effectively recovered when individual cores in the multi-core system fail.

To address the above problems in the related technologies, the present application provides a multi-core MCU monitoring method. The master core monitors state information of slave core monitoring tasks by configuring a plurality of slave core monitoring tasks with different periods in each slave core. The master core obtains the state information corresponding to the slave monitoring tasks of the respective slave cores to determine whether any target slave core is in a hang state. If a target slave core in a hang state exists, a first duration for which the target slave core remains in the hang state is determined. If the first duration reaches a corresponding first preset duration, a recovery operation corresponding to the target slave core is performed. In this way, when an abnormal slave core occurs, it is recovered in time, thereby ensuring the multi-core system to recover in a timely and effective manner, thus ensuring that the entire system resumes normal operation.

To facilitate understanding, embodiments of the multi-core MCU monitoring method as provided in the present application will be described in detail below with reference to the accompanying drawings and application scenarios.

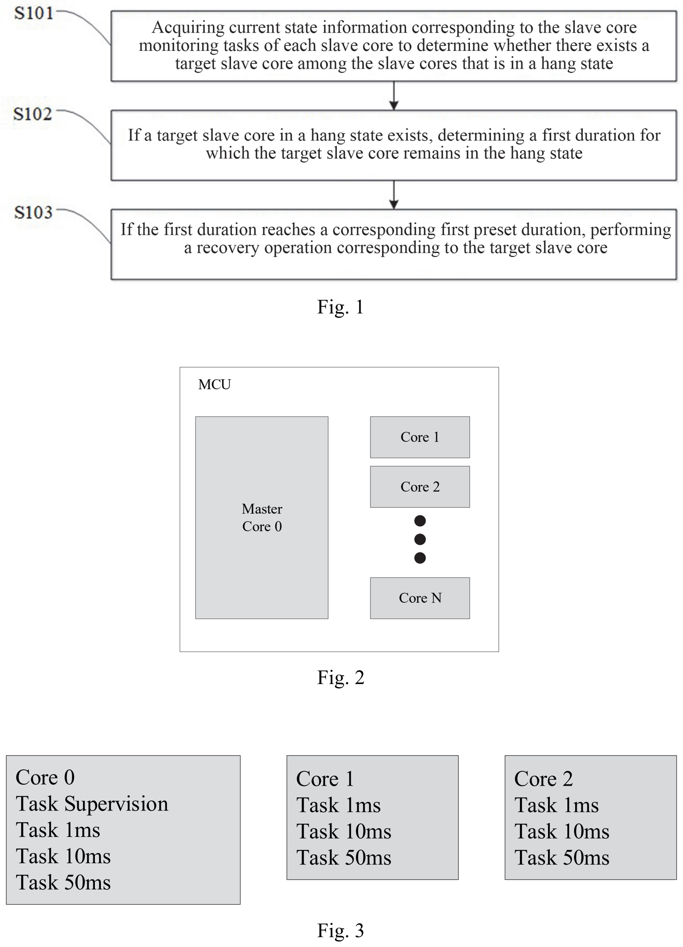

The present application further provides a multi-core MCU monitoring method. Reference is made to Fig. 1, which is a schematic flow chart of a multi-core MCU monitoring method according to a first embodiment of the present application.

The multi-core MCU monitoring method is applied to a master core of a multi-core MCU. The multi-core MCU includes a master core and a plurality of slave cores. Each slave core is provided with a plurality of slave core monitoring tasks with different periods.

As shown in Fig. 2, the multi-core MCU includes a master core (Core0) and a plurality of slave cores (Core1, Core2, ..., CoreN). On the basis of AUTOSAR (Automotive Open System Architecture) framework and utilizing the design concept of the AUTOSAR OS, each independent core is assigned separate monitoring tasks (Application). As shown in Fig. 3, Core0 runs an Application0. Application0 includes a master core monitoring task Task Supervision, a master core monitoring task Task 1ms, a master core monitoring task Task 10ms, and a master core monitoring task Task 50ms. Core1 runs an Application1. Application1 includes a slave core monitoring task Task 1ms, a slave core monitoring task Task 10ms, and a slave core monitoring task Task 50ms. Core2 runs an Application2. Application2 includes a slave core monitoring task Task 1ms, a slave core monitoring task Task 10ms, and a slave core monitoring task Task 50ms. Task Supervision of Core0 is configured as the highest-priority task, ensuring that it can operate even when other tasks are in a hang state. The master core monitors the Applications of the slave cores through Task Supervision. Time thresholds for the various monitoring tasks, such as Task 1ms, Task 10ms, and Task 50ms, can be reasonably set according to the processing time of the tasks executed by the master core or a slave cores. The master core or each slave core can run one or more tasks simultaneously.

Step S101: acquiring current state information corresponding to slave core monitoring tasks in each slave core to determine whether there exists a target slave core among the slave cores that is in a hang state.

When monitoring the slave cores, the master core acquires the current state information corresponding to the slave core monitoring tasks in each slave core. Specifically, in a possible embodiment, step S101 comprises:
step S1011: receiving, via a PPort interface, the current state information corresponding to the slave core monitoring tasks in each slave core. For each slave core, the slave core executes the slave core monitoring tasks and, based on its task scheduling information, feeds back current state information of the respective slave core monitoring tasks through the PPort interface.

Each slave core runs its slave core monitoring tasks and provides feedback on the current state information corresponding to the slave core monitoring tasks based on the task scheduling information of the slave core through the PPort interface of the slave core. The Application of the slave core runs a Task corresponding to a currently executing task. For example, during task scheduling, when a task (e.g., Task 1ms of Application1) is executed, and the current state information (e.g., alive counter) corresponding to Task 1ms is transmit to Core0 through the PPort interface (as a checkpoint), and the Task 1ms of Core0 receives the alive counter through an RPort. Specifically, the PPort (provider port) and the RPort (requester port) are two port types in AUTOSAR serving as checkpoints for interfacing software components. A PPort provides the service of an interface and RPort requests the service of an interface.

The master core then determines whether there exists any target slave core in a hang state, based on the state information of the slave monitoring tasks. Specifically, the master core checks whether the state information corresponding to each slave core monitoring task changes, and identifies a target slave core in a hang state (Dead task) among the slave cores based on a duration for which the state information remains unchanged.

Step S102: if a target slave core in a hang state exists, determining a first duration for which the target slave core remains in the hang state.

If there exists a target in a hang state, the first duration during which the target slave core remains in the hang state is determined. Specifically, if a duration for which the state information of the target slave core remains unchanged reaches a preset duration, the master core designates the target slave core as being in a hang state (Dead task) and accumulates the first duration of the slave core in the hang state (Dead task).

Step S103: if the first duration reaches the corresponding first preset duration, performing a recovery operation corresponding to the target slave core.

After the first duration of the target slave core being in the hang state is acquired, whether the first duration reaches the corresponding first preset duration is determined. The first preset duration can be appropriately configured according to the slave core monitoring task causing the target slave core to enter a hang state.

If the first duration reaches the first preset duration, the recovery operation corresponding to the target slave core is performed. For example, a schedule table corresponding to the target slave core is obtained and restarted to recover the abnormal target slave core.

If the state information of the slave core monitoring task causing the target slave core to be in the hang state is received before the first duration reaches the first preset duration, and the received state information is inconsistent with recorded state information, the state of the target slave core is updated from the hang state to a normal state and the first duration is reset.

The method obtains the state information corresponding to the slave core monitoring tasks in each slave core to determine whether there is any target slave core that is in a hang state. Then, if a target slave core in a hang state exists, the first duration of the target slave core in the hang state is determined. Subsequently, if the first duration reaches the first preset duration, the recovery operation corresponding to the target slave core is executed. Slave cores are monitored in real time by means of slave core monitoring tasks, and if an abnormal target slave core exists, the target slave core can be recovered in time, so that abnormal slave cores in a multi-core MCU can be recovered in time. In this way, when any abnormal slave cores in the multi-core system appear, the slave cores are effectively and timely recovered, ensuring that the entire system resumes normal operation.

A second embodiment of the multi-core MCU monitoring method according to the present application is provided on the basis of the first embodiment, wherein step S101 comprises:
step S201: acquiring the current state information corresponding to the slave core monitoring tasks in each slave core;
step S202: if there exists a first slave core monitoring task whose current state information is inconsistent with recorded state information corresponding to it, updating the recorded state information of the first slave core monitoring task; and
step S203: determining, based on the recorded state information of each slave core monitoring task, whether a target slave core among the slaves that is in the hang state.

When monitoring the slave cores, the master core acquires current state information corresponding to the slave core monitoring tasks in respective slave cores. Specifically, the master core receives the current state information corresponding to the slave core monitoring tasks in each slave core through the PPort interface. Each slave core runs slave core monitoring tasks and feeds back the current state information of corresponding slave monitoring tasks based on the task scheduling information of the slave core. The Application of the slave core executes the Task corresponding to the currently running task. For example, during task scheduling, Core1 calls the Task 1ms of Application1, the current state information (alive counter) corresponding to Task 1ms is sent to Core0 through the PPort (checkpoint), and the Task 1ms of Core0 receives the alive counter through the RPort.

Then, the master core determines whether there is a target slave core in a hang state exists among the slave cores based on the state information corresponding to the slave monitoring tasks. Specifically, the master core determines whether there is a first slave core monitoring task having current state information inconsistent with its corresponding recorded state information. The recorded state information refers to the state information of a slave monitoring task as recorded by the master core prior to the current moment. If there exists a first slave core monitoring task whose current state information is inconsistent with its corresponding recorded state information, the master core updates the recorded state information corresponding to the first slave core monitoring task, that is, the current state information of the first slave core monitoring task is adopted as the new recorded state information.

After the recorded state information is updated, the master core determines whether there exists a target slave core in a hang state among the slave cores based on the recorded state information of each slave core monitoring task. Specifically, in a possible embodiment, step S203 includes:
step S2031: based on recorded state information of each slave core monitoring task, determining an update duration of the recorded state information corresponding to each slave core monitoring task; and
step S2032: determining whether there exists a target slave core in a hang state among the slave cores based on the update durations.

After updating the recorded state information, the master core determines the update duration of the recorded state information corresponding to each slave core monitoring task based on the recorded state information of each slave core monitoring task. Each time the recorded state information corresponding to a slave core monitoring task is updated, the master core accumulates the update duration of the corresponding recorded state information, so as to obtain the update duration of recorded state information corresponding to each slave core monitoring task.

After the update duration of recorded state information corresponding to each slave core monitoring task is obtained, the master core determines, based on these update durations, whether there exists a target slave core in a hang state among the slave cores, thereby accurately detects the currently hung target slave cores. Specifically, in a possible embodiment, step S2032 includes:
step a: determining whether there exists a second duration among the update durations that is longer than a corresponding second preset duration; and
step b: if a second duration longer than the corresponding second preset duration exists among the update durations, determining a slave core corresponding to the second duration as the target slave core.

After obtaining the update duration of recorded state information corresponding to each slave core monitoring task, the master core acquires the second preset duration corresponding to each slave core monitoring task, the second preset duration corresponding to each update duration can thus be obtained. The master core then determines whether any update duration exceeds its corresponding second preset duration. The second preset duration can be reasonably set based on the corresponding slave core monitoring tasks of a slave core.

If there exists a second duration among the update durations that is longer than its corresponding second preset duration, the master core designates the slave core corresponding to that second duration as the target slave core, so as to accurately identify abnormal target slave cores and improve the accuracy of slave core monitoring.

The current state information corresponding to the slave core monitoring tasks of each slave core is obtained, and if there exists a first slave core monitoring task whose current state information is inconsistent with its corresponding recorded state information, the recorded state information corresponding to the first slave core monitoring task is updated. Then, it is determined as to whether there is a target slave core among the slave cores that is in a hang state, based on the recorded state information of the respective slave core monitoring tasks. The target slave core in a hang state can be accurately identified based on the current state information corresponding to the slave core monitoring tasks. This enables timely recover of a target slave core in the event of abnormality, allowing an abnormal slave core in the multi-core MCU to be restarted and recovered in time, ensuring that the slave cores in the multi-core MCU system can be promptly and effectively recovered, so as to restore the normal operation of the entire system.

A third embodiment of the multi-core MCU monitoring method according to the present application is provided on the basis of the first embodiment, wherein step S103 includes:
step S301: if the first duration reaches the corresponding first preset duration, acquiring a schedule table corresponding to the target slave core; and
step S302: restarting the schedule table and outputting error information corresponding to the target slave core.

After the first duration during which the target slave core is in a hang state is acquired, it is determined whether the first duration reaches the corresponding first preset duration. The first preset duration can be reasonably set based on the slave core monitoring task that caused the target slave core to enter the hang state.

If the first duration reaches the corresponding first preset duration, the target slave core is determined to be abnormal, and the schedule table corresponding to the target slave core is then obtained.

After obtaining the schedule table corresponding to the target slave core, the recovery operation corresponding to the target slave core is performed. Specifically, the schedule table is restarted and error information corresponding to the target slave core is output, i.e., the error information is printed to the CAN (Controller Area Network) and DLT (Diagnostic Log And Trace).

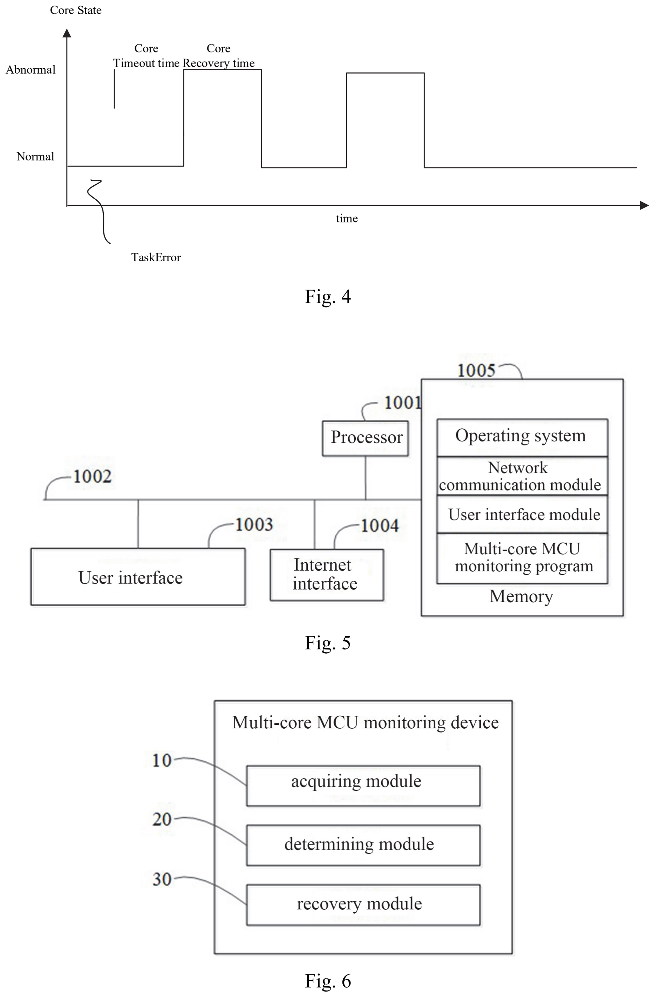

Restarting the schedule table involves the following steps: closing the schedule table, waiting for a duration reaching the preset wait time, Core Recovery Time, after the schedule table is closed, and then starting the schedule table. As shown in Fig. 4, which is a schematic diagram of Core state printing changes, Core Timeout Time represents the first preset duration, Task Timeout Time represents the second preset duration, and Core Recovery Time represents the time required to restart the schedule table. After a Task Error occurs, it is considered that the core is abnormal if (Task Timeout Time) + (Core Timeout Time) has elapsed, and an attempt is made to recover it. After the schedule table ScheduleTable is closed, it is restarted after the (Core Recovery Time) elapses. If reopening of the schedule table cannot restore normal operation, periodic attempts are made until the core recovers to normal state.

Further, in a possible embodiment, after step S302, the multi-core MCU monitoring method further includes:
step c: resetting the first duration and the second duration after the schedule table is restarted.

After the completion of restarting the schedule table, the first duration and the second duration are reset, thereby re-enabling the monitoring of the target slave core and the slave core monitoring task causing the target slave core to be abnormal.

When the duration reaches the preset duration, the schedule table corresponding to the target slave core is obtained, after which the schedule table is restarted and the error information corresponding to the target slave core is output. By restarting the schedule table corresponding to the target slave core, the abnormal target slave core is recovered, thereby enabling timely recover of the abnormal slave cores in the multi-core MCU. This allows the abnormal slave core in the multi-core MCU to be restarted and recovered, thus promptly restoring normal operation of the entire system.

A fourth embodiment of the multi-core MCU monitoring method according to the present application is provided according to the above embodiments. The master core includes a plurality of master core monitoring tasks with different periods, and the multi-core MCU monitoring method further includes:
step S401: determining whether the master core is in a hang state based on state information corresponding to each master core monitoring task;
step S402: if the master core is in the hang state, determining a third duration for which the master core remains in the hang state; and
step S403: if the third duration reaches a corresponding third preset duration, restarting a system corresponding to the multi-core MCU.

The master core may be configured with a plurality of master core monitoring tasks with different periods to monitor the master core itself. Specifically, it is determined whether the master core is in a hang state, based on the state information corresponding to each master core monitoring task. The determination of whether the master core is in a hang state is similar to the determination of whether a slave core is in a hang state, and thus will not be described in detail herein.

If the master core is in a hang state, the third duration during which the master core is in the hang state is determined. If the third duration reaches the corresponding third preset duration, the system corresponding to the multi-core MCU is restarted. That is, when an abnormality occurs in the master core, the system corresponding to the multi-core MCU can be directly restarted to achieve recovery of the system.

Whether the master core is in a hang state is determined based on the state information corresponding to each master core monitoring task. If the master core is in the hang state, the third duration during which the master core being in the hang state is determined. If the third duration reaches the corresponding third preset duration, the system corresponding to the multi-core MCU is restarted. When abnormality of the master core is detected, the system corresponding to the multi-core MCU is restarted to recover the entire system. This allows timely and effective recovery of the slave cores in the multi-core system when an abnormality occurs, thereby promptly restoring normal operation of the entire system.

In addition, the present application further provides a vehicle, as shown in Fig. 5, which is a structural schematic diagram of the vehicle in a hardware operating environment according to an embodiment of the present application.

As shown in Fig. 5, the vehicle may include: a processor 1001 which for example may be a CPU, a network interface 1004, a user interface 1003, a memory 1005, and a communication bus 1002. The communication bus 1002 is used for communication connection of these components. The user interface 1003 may include a display and an input unit such as a keyboard. Optionally, the user interface 1003 may further include a standard LAN port and a wireless interface. Optionally, the network interface 1004 may include a standard LAN port and a wireless interface such as Wi-Fi interface. The memory 1005 may be a high-speed RAM memory, or a non-volatile memory such as a disk storage. Optionally, the memory 1005 may also be a memory storage independent from the processor 1001.

Optionally, the vehicle may further include a camera, a RF (Radio Frequency) circuit, a sensor, an audio-frequency circuit, and a Wi-Fi module. The sensor may include a light sensor, a motion sensor, or other sensors. Of course, the vehicle can be further equipped with a gyroscope, an air pressure gauge, a hygrometer, a thermometer, an IR infrared sensor, or other sensors, which will not be described in detail.

Persons skilled in the art will appreciate that the terminal structure shown in Fig. 5 is not limiting, and that additional or fewer components than those shown in the drawing may be included, or some of components may be combined or differently arranged.

As shown in Fig. 5, the memory 1005, as a computer-readable storage medium, may include an operating system, a network communication module, a user interface, and a multi-core MCU monitoring program.

In the vehicle as shown in Fig. 5, the network interface 1004 is used to connect to a back-end server for data communication, while the user interface 1003 is used to connect to a client terminal (user side) for communication with users. The processor 1001 executes the multi-core MCU monitoring program stored in the memory 1005.

In this embodiment, the vehicle includes the memory 1005, the processor 1001, and the multi-core MCU monitoring program which can run on the processor 1001. The multi-core MCU monitoring program stored in the memory 1005, when called by the processor 1001, causes implementation of the above-mentioned steps of the multi-core MCU monitoring method.

In addition, the present application further provides a multi-core MCU monitoring device, which is applied to a master core of a multi-core MCU that includes a plurality of slave cores. Each slave core contains slave core monitoring tasks with different periods. As shown in Fig. 6, the multi-core MCU monitoring device includes:
an acquiring module 10 configured to acquire state information corresponding to the slave core monitoring tasks in each slave core to determine whether there exists a target slave core among the slave cores that is in a hang state;
a determining module 20 configured to determine, if the target slave core in the hang state exists, a first duration during which the target slave core is in the hang state; and
a recovery module 30 configured to perform a recovery operation corresponding to the target slave core if the first duration reaches the corresponding first preset duration.

The methods executed by the above program units may refer to the embodiments of the multi-core MCU monitoring method described in the present application, and will not be repeated here.

In another embodiment, the multi-core MCU monitoring device includes a processor configured to execute the above program modules stored in the memory. The program modules include the acquiring module, the determining module, and the recovery module.

In addition, the present application further provides a computer-readable storage medium having stored thereon a multi-core MCU monitoring program. When executed by a processor, the multi-core MCU monitoring program implements the steps of the multi-core MCU monitoring method as described above.

It should be noted that the terms "include"", "comprise", and any variants thereof are intended to cover a non-exclusive inclusions. For example, processes, methods, objects, or systems that comprises a series of elements not only include those elements, but may also include other elements that are not explicitly listed, or inherent elements of such processes, methods, objects, or systems. Without further limitation, an element defined by the term "comprises a ..." does not exclude the existence of additional, identical element in the processes, methods, objects, or systems of the element.

The serial numbers of the above embodiments are merely for description and do not imply superiority or inferiority of the embodiments.

Through the above description of the embodiments, those skilled in the art can clearly understand that the method according to the above embodiments can be implemented by means of software combined with a necessary general-purpose hardware platform, although they may also be implemented by hardware. In many cases, the former is a preferable approach. Based on such understanding, the technical solutions of the present application, in essence, or the parts contributing to the prior art, may be embodied in the form of a software product. This computer software product is stored in a storage medium (such as ROM/RAM, a magnetic disk, or an optical disk) as described above, and includes several instructions to enable a terminal device (which may be a mobile phone, a computer, a server, an air-conditioner, or a network device, etc.) to execute the method according to the embodiments of the present application.

The above descriptions are merely preferred embodiments of the present application and are not intended to limit the scope of the present application. Any equivalent structural or procedural modifications made based on the content of the description and accompanying drawings of the present application, or direct or indirect application in other related technical fields, shall fall within the scope of the present application.

## Claims

1. A multi-core MCU monitoring method, applied to a master core of a multi-core MCU, the multi-core MCU further comprising a plurality of slave cores, each slave core provided with a plurality of slave core monitoring tasks with different periods, the multi-core MCU monitoring method comprising the following steps:
acquiring current state information corresponding to the slave core monitoring tasks in each slave core to determine whether there exists a target slave core among the slave cores that is in a hang state;
if a target slave core in a hang state exists, determining a first duration for which the target slave core remains in the hang state; and
if the first duration reaches a corresponding first preset duration, performing a recovery operation corresponding to the target slave core.

2. The multi-core MCU monitoring method according to claim 1, wherein the step of acquiring current state information corresponding to the slave core monitoring tasks in each slave core to determine whether there exists a target slave core among the slave cores that is in a hang state comprises:
acquiring the current state information corresponding to the slave core monitoring tasks in each slave core;
if there exists a first slave core monitoring task whose current state information is inconsistent with recorded state information corresponding to it, updating the recorded state information corresponding to the first slave core monitoring task; and
determining, based on the recorded state information of each slave core monitoring task, whether there exists a target slave core among the slave cores that is in the hang state.

3. The multi-core MCU monitoring method according to claim 2, wherein the step of determining, based on the recorded state information of each slave core monitoring task, whether there exists a target slave core among the slave cores that is in the hang state comprises:
determining, based on the recorded state information of each slave core monitoring task, an update duration of the recorded state information of each slave core monitoring task; and
determining, based on the update durations, whether there exists a target slave core among the slave cores that is in the hang state.

4. The multi-core MCU monitoring method according to claim 3, wherein the step of determining, based on the update durations, whether there exists a target slave core among the slave cores that is in the hang state comprises:
determining whether there exists a second duration among the update durations that is longer than a corresponding second preset duration; and
if a second duration longer than the corresponding second preset duration exists among the update durations, determining a slave core corresponding to the second duration as the target slave core.

5. The multi-core MCU monitoring method according to claim 2, wherein the step of acquiring current state information corresponding to the slave core monitoring tasks in each slave core comprises:
receiving, via a provider port interface, the current state information corresponding to the slave core monitoring tasks in each slave core, wherein each slave core executes the slave core monitoring tasks and, based on task scheduling information of the slave core, feeds back the current state information corresponding to the slave core monitoring tasks through the provider port interface of the slave core.

6. The multi-core MCU monitoring method according to claim 1, wherein the step of, if the first duration reaches a corresponding first preset duration, performing a recovery operation corresponding to the target slave core comprises:
if the first duration reaches the first preset duration, acquiring a schedule table corresponding to the target slave core; and
restarting the schedule table and outputting error information corresponding to the target slave core.

7. The multi-core MCU monitoring method according to claim 6, wherein after restarting the schedule table and outputting error information corresponding to the target slave core, the method further comprises:
resetting the first duration and the second duration after completion of the restart of the schedule table.

8. The multi-core MCU monitoring method according to any of claims 1-7, wherein the master core is provided with a plurality of master core monitoring tasks with different periods, and the multi-core MCU monitoring method further comprises:
determining whether the master core is in a hang state based on state information corresponding to each master core monitoring task;
if the master core is in a hang state, determining a third duration for which the master core remains in the hang state; and
if the third duration reaches a corresponding third preset duration, restarting a system corresponding to the multi-core MCU.

9. A multi-core MCU monitoring device, applied to a master core of a multi-core MCU, the multi-core MCU further comprising a plurality of slave cores, each slave core provided with a plurality of slave core monitoring tasks with different periods, the multi-core MCU monitoring device comprising:
an acquiring module, configured to acquire state information corresponding to the slave core monitoring tasks in each slave core to determine whether there exists a target slave core among the slave cores that is in a hang state;
a determining module, configured to determine a first duration for which the target slave core remains in the hang state when a target slave core in a hang state exists; and
a recovery module, configured to perform a recovery operation corresponding to the target slave core if the first duration reaches a corresponding first preset duration.

10. A vehicle, comprising a memory, a processor, a multi-core MCU monitoring program stored in the memory and executable on the processor, wherein when executed by the processor, the multi-core MCU monitoring program implements the steps of the multi-core MCU monitoring method according to any of claims 1-8.

11. A computer-readable storage medium, having stored thereon a multi-core MCU monitoring program which, when executed by a processor, implements the steps of the multi-core MCU monitoring method according to any of claims 1-8.
